# EUROPÄISCHE PATENTSCHRIFT

(11) **EP 0 953 429 B1**
(45) Veröffentlichungstag und Bekanntmachung des Hinweises auf die Patenterteilung: **16.06.2004**
(21) Anmeldenummer: 99107044.2
(22) Anmeldetag: 09.04.1999
(51) Int. Cl.: B29C 65/10, B31B 1/84, B29C 65/00, B31B 19/64, B31B 19/84

(54) **Verfahren zum Regeln der Temperatur der erwärmten Luft in einer Vorrichtung zum Heissluftverkleben von Kunststofffolien**
Process for controlling the temperature of the heated air in an apparatus for hot air welding of synthetic sheets
Procédé de règlage de la température de l'air chauffé dans un appareil de soudage de feuilles synthétiques par air chaud

(30) Priorität: 27.04.1998 DE 19818720
(43) Veröffentlichungstag der Anmeldung: 03.11.1999
(73) Patentinhaber: Windmöller & Hölscher, D-49525 Lengerich (DE); Starlinger & Co. Ges.m.b.H., 1060 Wien (AT)
(72) Erfinder: Starlinger-Huemer, Franz X. Ing., 1060 Wien (AT)
(74) Vertreter: Gossel, Hans K., Dipl.-Ing.

(56) Entgegenhaltungen:
- WO-A-89/11390
- DE-A- 19 502 255
- US-A- 4 834 828

## Beschreibung

Die Erfindung betrifft ein Verfahren zum Regeln der Temperatur von erwärmter Luft in einer Vorrichtung zum Verkleben von Kunststoffolien, vorzugsweise zum Aufbringen von Zetteln aus Kunststoffolie auf flachliegende Werkstücke aus Kunststoffolie, z.B. von Ventilzetteln auf die aufgezogenen Bodenquadrate oder von Bodendeckblättem auf die zugelegten Böden von Kreuzbodenventilsäcken, wobei die Vorrichtung aus einem Gestell mit einer Platte oder einem Tisch, über den die Schlauch- oder Werkstücke durch eine Fördereinrichtung kontinuierlich gefördert werden, einem in einem Spalt der Tischplatte angeordnetem und im Gestell gelagerten Förderwalzenpaar, dessen Walzenspalt im wesentlichen mit der Tischoberfläche fluchtet und dessen untere Walze eine Gegendruckwalze und dessen obere Walze ein Saugzylinder ist, einem mit dem Saugzylinder zusammenwirkenden Förderzylinder, der aufeinanderfolgend die Zettel an den Saugzylinder übergibt, und aus einer auf den Walzenspalt gerichteten Breitschlitzdüse, die in gesteuerter Weise erwärmte Luft in den Walzenspalt bläst, besteht.

Bei einer aus DE 195 02 255 A1 bekannten Vorrichtung dieser Art werden die Werkstücke, also beispielsweise bei der Herstellung von Kreuzbodensäcken die Schlauchstücke mit aufgezogenen bzw. zugelegten Böden kontinuierlich über eine diese stützende Platte oder einen Tisch gefördert, wobei diese über den Tisch gleiten. Werden gleichzeitig auf beide aufgezogenen oder zugelegten Böden Zettel oder Bodenblätter aufgebracht, erfolgt die aufeinanderfolgende Förderung der Werkstücke querliegend. Der Tisch ist in einem Spalt mit einem Förderwalzenpaar versehen, dessen Walzenspalt im wesentlichen mit der Tischoberfläche fluchtet, so daß die Werkstücke in diesen Walzenspalt einlaufen können. Von dem Förderwalzenpaar ist die untere Walze als Gegendruckwalze ausgebildet, während die obere Walze ein Saugzylinder ist. Dieser in seinem Mantel beispielsweise in gleichen Winkelabständen mit Saugluftbohrungen versehene Saugzylinder arbeitet mit einem Förderzylinder zusammen, der aufeinanderfolgend die Zettel an den Saugzylinder übergibt. Dieser Saugzylinder bügelt somit in dem Walzenspalt auf die durch diesen hindurchlaufenden Werkstücke gleichsam den Zettel auf. Damit der Zettel mit dem Werkstück verklebt, ist auf den Walzenspalt eine Breitschlitzdüse gerichtet, die in gesteuerter Weise erwärmte Luft in den Walzenspalt bläst. Die Luft weist dabei eine so hohe Temperatur auf, daß die Oberflächen des Zettels und des Werkstücks bis zur Klebrigkeit plastifiziert werden, so daß der Zettel in dem Walzenspalt des Förderwalzenpaares auf das Werkstück gedrückt wird und dadurch eine gute Verklebung des Zettels mit dem Werkstück erfolgt. Die Zuführung der Zettel ist auf den Durchlauf der Werkstücke derart abgestimmt, daß ein lagerichtiges Aufkleben der Zettel auf die Werkstücke erfolgt. Die Zuführung der Heißluft ist dabei so gesteuert, daß im wesentlichen nur die mit einander zu verklebenden Bereiche in der erforderlichen Weise plastifiziert bzw. angeschmolzen werden. Dabei wird auch die Durchlaufgeschwindigkeit des jeweiligen Werkstücks und des Zettels so gewählt, daß eine gute Verklebung beider Teile erfolgt. Da in den Walzenspalt die die Verklebung bewirkende Heißluft eingeblasen wird, läßt sich nicht ausschließen, daß sich der Saugzylinder mit der Zeit erwärmt. Diese Erwärmung ist jedoch grundsätzlich unschädlich, da der Saugzylinder keine mechanischen Teile, beispielsweise Greifeinrichtungen, aufweist, die über die Betriebszeit durch Verschmieren mit plastifiziertem Kunststoff funktionsunfähig werden könnten. Falls erforderlich, kann die Saugwalze zusätzlich auch mit einer Kühlung versehen sein. Jedenfalls verhindert die Saugwalze, daß der Förderzylinder in unzulässiger Weise durch die Heißluft aufgeheizt wird, so daß dessen Funktionstüchtigkeit beeinträchtigt werden könnte.

Die Haftung der aufzuklebenden Zettel auf der oberen Walze des Förderwalzenpaars könnte auch dadurch bewirkt werden, daß diese statt aus einem Saugzylinder aus einem statisch aufgeladenen Zylinder besteht.

Der die Zettel an den Saugzylinder übergebende Förderzylinder ist zweckmäßigerweise ein Messerzylinder, dessen Messer von einer kontinuierlich oder intermittierend zulaufenden Kunststoffbahn die Zettel abtrennt. Zur Halterung der Zettel auf dem Förderzylinder kann dieser über einen Teil seines Umfangs von einem Trum eines endlosen Bandes oder einer endlosen Bänderschar umschlungen sein, die den zu übergebenden Zettel an den Umfang des Förderzylinders andrücken.

Der Förderzylinder kann zur Halterung der Zettel auf diesem auch mit Greifern versehen sein.

Oberhalb der Tischplatte ist zweckmäßigerweise ein Kühlblech angeordnet, wobei die Werkstücke durch den Spalt zwischen dem Kühlblech und der Tischplatte dem Walzenspalt zugeführt werden. Dieses Kühlblech, das mit von einem kühlenden Medium durchflossenen Kanälen versehen sein kann, verhindert, daß sich durch die in den Walzenspalt eingeblasene Heißluft der Tisch und andere Vorrichtungsteile derart aufheizen, daß die Werkstücke aus Kunststoff klebrig werden und an der Tischplatte der anderen Vorrichtungsteile hängenbleiben können.

In der Zuführungsleitung zu der Breitschlitzdüse ist in weiterer Ausgestaltung der Erfindung ein Ventil angeordnet, das zum gesteuerten Ausblasen der Heißluft in den Walzenspalt mit einer Steuereinrichtung versehen ist. Das Ventil kann beispielsweise aus einem Drehschieber bestehen, das zu seiner Steuerung von einer Druckmittelkolbenzylindereinheit verstellt wird.

Um die Breitschlitzdüse in optimaler Weise auf den Walzenspalt einzustellen, kann die Breitschlitzdüse durch eine Steuereinrichtung in Richtung auf den Walzenspalt und zurück verfahrbar sein. Dabei kann die Breitschlitzdüse soweit zurückfahrbar sein, daß sie völlig aus dem Bereich des Walzenspalts entfernt ist.

Ein besonderes Problem bei der aus DE 195 02 255 A1 bekannten Vorrichtung ergibt sich daraus, daß in den zu verklebenden Bereichen durch die aus der Breitschlitzdüse ausgeblasene erwärmte Luft die richtige Wärmemenge zur Verklebung zugeführt werden muß. Diese Wärmemenge schwankt jedoch entsprechend der Umgebungstemperatur und der Temperatur der Vorrichtung. Aus diesem Grunde ist bei der bekannten Vorrichtung das die Luft erwärmende Heizaggregat mit einer Stelleinrichtung verbunden, die der Maschinenführer aufgrund seiner Beobachtung der verklebten Bereiche derart verstellt, daß wärmere oder kältere Luft aus der Breitschlitzdüse ausgeblasen wird. Die Einstellung der Temperatur der erwärmten Luft von Hand aufgrund einer Beobachtung der verklebten Bereiche ist zwangsläufig jedoch Fehlem unterworfen, da sowohl die Beobachtungen nicht genau genug ausgeführt werden können und weil die Einstellung von Hand nicht genau genug erfolgen kann.

Aufgabe der Erfindung ist es daher, ein Verfahren zum Regeln der Temperatur der erwärmten Luft der eingangs angegebenen Art vorzuschlagen, daß eine genaue Einregelung der Temperatur auf optimal ausgeführte Verklebungen ermöglicht.

Erfindungsgemäß wird diese Aufgabe dadurch gelöst, daß die Temperatur unmittelbar nach der Verklebung des verklebten Bereichs des Werkstücks, bei der eine gute Verklebung erfolgt, als Sollwert bestimmt wird und daß die Temperatur der erwärmten Luft auf diesen Sollwert eingeregelt wird.

Aufgrund einer erfinderischen Erkenntnis wurde festgestellt, daß sich die Qualität der ausgeführten Verklebung unmittelbar nach der Ausführung der Verklebung durch die Temperatur des verklebten Bereichs bestimmten läßt. Denn in Abhängigkeit von dem jeweils zu verschweißenden Kunststoffmaterial weist der verklebte Bereich unmittelbar nach der Ausführung der Verklebung, die in optimaler Weise ausgeführt worden ist, eine vorbestimmte Temperatur auf, die sich durch Messung bestimmen läßt. Diese vorbestimmte, eine optimale Verklebung anzeigende Temperatur wird empirisch oder in sonstiger Weise bestimmt und bildet den Sollwert des Regelverfahrens. Um entsprechend diesem vorgegebenen Sollwert optimale Verklebungen zu erreichen, wird die Temperatur der erwärmten Luft auf diesen Sollwert eingeregelt.

Eine laufende Regelung ist erforderlich, weil entsprechend der Temperatur der Umgebungsluft und der Temperatur der Vorrichtung selbst die Ist-Temperatur des verklebten Bereiches schwankt.

Nach dem erfindungsgemäßen Verfahren wird die Temperatur des verklebten Bereichs des Werkstücks als Istwert unmittelbar nach der Verklebung gemessen und die Temperatur der erwärmten Luft wird so lange erhöht oder erniedrigt, bis der Ist-Wert der Messung dem Sollwert entspricht.

Die Einregelung der Temperatur der erwärmten Luft auf den Sollwert ist insbesondere dann erschwert, wenn die Vorrichtung aufgrund eines längeren Stillstandes kalt ist. Nach einer bevorzugten Ausführungsform der Erfindung ist daher vorgesehen, daß die Temperatur der Vorrichtung gemessen und eine dieser Temperatur entsprechende Voreinstellung der Temperatur der erwärmten Luft erfolgt. Aufgrund der nachfolgenden Regelung brauchen daher grundsätzlich nur geringere Abweichungen des Istwerts von dem Sollwert ausgeregelt zu werden.

Ein Ausführungsbeispiel der Erfindung wird nachstehend anhand der Zeichnung näher erläutert. In dieser zeigt
- Fig. 1: eine Seitenansicht der Vorrichtung zum Aufbringen und Aufkleben von Zetteln auf Werkstücke in schematischer Darstellung,
- Fig. 2: eine Draufsicht auf einen zugelegten Kreuzboden mit aufgeklebtem Bodendeckblatt und
- Fig. 3: einen aufgezogenen Boden mit auf einen Eckeinschlag aufgeklebten Ventilzettel.

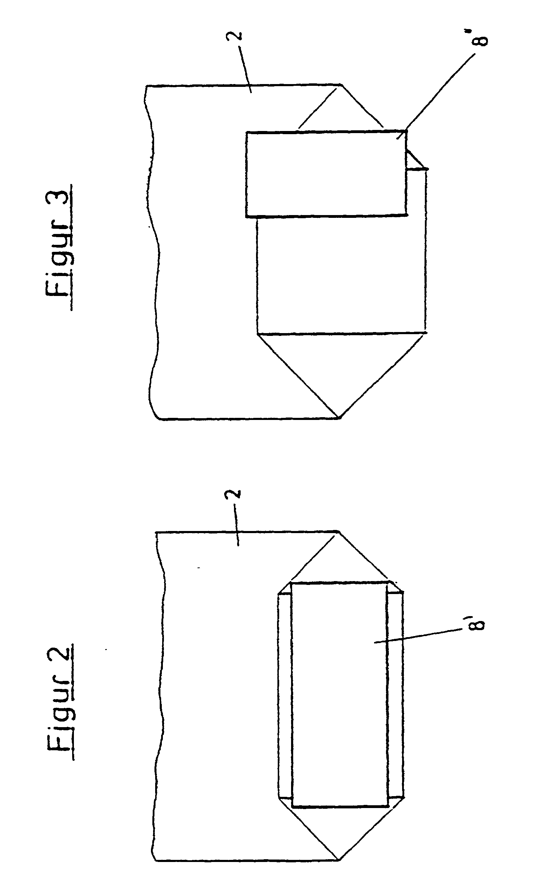

In einem nicht dargestellten Gestell ist eine Tischplatte 1 gehaltert, auf der in Richtung des Pfeils A kontinuierlich flachliegende Schlauchstücke aus Kunststoff mit aufgezogenen oder zugelegten Böden durch nicht dargestellte Fördereinrichtungen gefördert werden. Bei den im gegenseitigen Abstand voneinander querliegend geförderten Schlauchstücken 2 sind die zugelegten Böden bzw. die aufgezogenen Böden in der aus den Fig. 2 und 3 ersichtlichen Weise in die Ebene der flachliegenden Schlauchstücke geklappt. In einem querverlaufenden Spalt 3 des Tisches 1 sind im Maschinengestell eine Gegendruckwalze 4 und eine Saugwalze 5 gelagert, die zusammen ein Förderwalzenpaar bilden und deren Walzenspalt im Bereich der Ebene der Oberseite des Tisches 1 liegt. Der Saugzylinder 5 ist in seinem Mantel in etwa gleichen Winkelabständen mit Reihen von Saugluftbohrungen 6 versehen. Dem Innern des Saugzylinders 6 wird die Saugluft in üblicher Weise durch eine nicht dargestellte Drehdurchführung zugeführt.

Oberhalb des Saugzylinders 5 ist im Maschinengestell ein Messer- und Förderzylinder 7 gelagert, an den die von einer nicht dargestellten endlosen Kunststoffbahn abgetrennten Zettel 8 durch ein Trum 9 einer endlosen Bänderschar 10 angedrückt werden, die über dem Maschinengestell gelagerte Umlenkwalzen 11, 12, 13 umlaufen, von denen die Walze 13 auch angetrieben sein kann. Der Messer- und Förderzylinder 7 ist in üblicher Weise mit einem längs einer Mantellinie verlaufenden Messer 14 versehen.

Vor dem Walzenspalt des Zylinderpaares 4, 5 endet ein Kühlblech 16, das mit einer nach oben hin abgewinkelten Einlaufseite 17 versehen ist. Das Kühlblech 16, 17 ist meander- und/oder schlangenförmig mit Kühlmittelrohren versehen, die von einem kühlenden Medium durchflossen werden. Dieses kühlende Medium, beispielsweise Wasser, wird durch nicht dargestellte Schlauchleitungen in den Stutzen 18 eingeleitet und aus dem Abführungsstutzen 19 wieder abgezogen. Oberhalb des Kühlbleches 16, 17 ist im Maschinengestell eine Schrägführung 20 gehaltert, auf der ein Heizaggregat 21 zwischen Anschlägen 22, 23 der Führung 20 durch eine Druckmittelkolbenzylindereinheit 24 hin- und hergehend verfahrbar ist. Das Kühlaggregat ist an seinem vorderen Ende mit einem Rohr 25 zum Ausblasen von Warmluft versehen. In dem Rohr 25 ist ein Drehschieber 26 angeordnet, dessen Schieber durch einen Betätigungshebel 27 in eine Öffnungs- und Schließstellung sowie Zwischenstellungen verbringbar ist. Zur Betätigung des Hebels 27 ist eine Druckmittelkolbenzylindereinheit 28 vorgesehen, die einerseits an das Heißluftaggregat 21 und andererseits an den Betätigungshebel 27 angelenkt ist. Ein Ausgang des Drehschiebers 26 mündet in ein Rohr 29, das eine Breitschlitzdüse 30 trägt, die in den Spalt zwischen den Walzen 4, 5 gerichtet ist. Der andere Ausgang des Drehschiebers 26 mündet in ein Rohr 32, das ins Freie mündet oder die Heißluft ableitet.

Der Saugzylinder 5 übernimmt die Zettel 8 in der dargestellten Weise von dem Messer- und Förderzylinder 7 und legt diese lagerichtig auf die durchlaufenden Sackwerkstücke auf. Dabei wird durch die Breitschlitzdüse 30 in den Walzenspalt, in dem sich der Zettel 8 und des Werkstück 2 befinden, Heißluft zu gesteuerten Zeitpunkten eingeblasen, die das Kunststoffmaterial plastifiziert bzw. in der Weise anschmilzt, daß die Zettel 8 mit den Werkstücken 2 verkleben.

Die Heißluftzuführung wird über die Druckmittelkolbenzylindereinheit 28 durch eine Steuereinrichtung taktmäßig gesteuert. Weiterhin läßt sich die Breitschlitzdüse 30 durch die Druckmittelkolbenzylindereinheit 24 in der gewünschten Weise in ihrer Entfernung zu dem Walzenspalt einstellen.

Aus Fig. 2 ist ein aus einem zugelegten Kreuzboden bestehendes Werkstück ersichtlich, auf das ein Bodenzettel 8' aufgeklebt wird.

Aus Fig. 3 ist ein Sackwerkstück 2 mit noch offenen Böden ersichtlich, bei dem auf dem vorlaufenden Eckeinschlag des einen Bodens der Ventilzettel 8" aufgeklebt wird, der beim Einfalten der Seiteneinschläge in bekannter Weise einen Ventilschlauch ergibt.

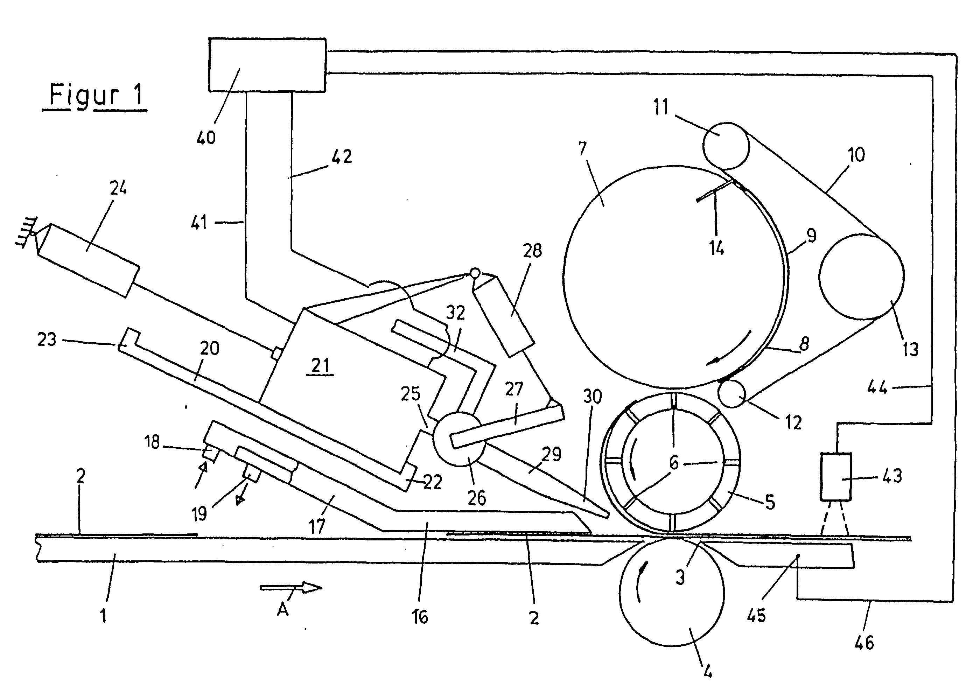

Die aus Fig. 1 ersichtliche Vorrichtung ist doppelt beidseits des Tisches 1 vorgesehen, wenn gleichzeitig beide an das Schlauchstück 2 angeformten Böden mit Bodendeckblättern 8' versehen werden sollen.

Soweit entspricht die beschriebene Vorrichtung der Vorrichtung nach DE 195 02 255 A1.

Erfindungsgemäß wird die Temperatur des Heizaggregats 21 bzw. der durch dieses erwärmten, der Verklebung dienenden Luft durch einen nicht dargestellten Temperaturfühler gemessen. Die Temperatursignale des Temperaturfühlers werden durch eine Signalleitung 41 einer aus einem Rechner bestehenden Steuer- und Regeleinheit 40 zugeführt. Diese Steuer- und Regeleinheit 40 steuert die Temperatur der ausgeblasenen erwärmten Luft durch eine Steuerleitung 42, die die Temperatur der elektrischen Heizelemente des Heizaggregats 21 entsprechend erhöht oder emiedrigt.

Unmittelbar hinter dem aus der Gegendruckwalze 4 und der Saugwalze 5 bestehenden Walzenpaar wird die Temperatur des verklebten Bereichs der Schlauchstücke 2 durch einen Temperaturfühler, im dargestellten Ausführungsbeispiel durch ein Infrarot-Pyrometer 43 gemessen, das im Maschinengestell im vorbestimmten Abstand oberhalb der auslaufenden Werkstücke angeordnet ist. Die Meßsignale des Temperaturfühlers 43 werden durch eine Signalleitung 44 der Kontroll- und Regeleinheit 40 zugeführt, die zur Einregelung der Temperatur der aus der Breitschlitzdüse 30 ausgeblasenen Warmluft auf die Solltemperatur des verklebten Bereichs die Temperatur der Warmluft entsprechend erhöht oder erniedrigt.

Die Temperatur des Tisches 1 wird hinter dem Spalt der Walzen 4, 5 durch einen Temperaturfühler 45 gemessen, dessen Signale über eine Signalleitung 46 der Kontroll- und Regeleinheit 40 zugeführt werden. Der Temperaturfühler 45 erfaßt im wesentlichen die Temperatur der Vorrichtung, so daß über die Kontroll- und Regeleinheit eine Voreinstellung der Temperatur der aus der Breitschlitzdüse 30 ausgeblasenen Heißluft erfolgen kann.

Unabhängig von der beschriebenen Regelung läßt sich die Temperatur der aus der Breitschlitzdüse 30 ausgeblasenen Heißluft auch von Hand an dem Kontroll- und Regelgerät einstellen, was zur Voreinstellung der Temperatur zweckmäßig sein kann.

## Patentansprüche

1. Verfahren zum Regeln der Temperatur von erwärmter Luft in einer Vorrichtung zum Verkleben von Kunststoffolien, vorzugsweise zum Aufbringen von Zetteln (8) aus Kunststoffolie auf flachliegende Werkstücke (2) aus Kunststoffolie, z.B. von Ventilzetteln auf die aufgezogenen Bodenquadrate oder von Bodendeckblättern auf die zugelegten Böden von Kreuzbodenventilsäcken,
wobei die Vorrichtung aus einem Gestell mit einer Platte oder einem Tisch (1), über den die Schlauch- oder Werkstücke (2) durch eine Fördereinrichtung kontinuierlich gefördert werden, einem in einem Spalt (3) der Tischplatte (1) angeordnetem und im Gestell gelagerten Förderwalzenpaar (4, 5), dessen Walzenspalt im wesentlichen mit der Tischoberfläche fluchtet und dessen untere Walze (4) eine Gegendruckwalze und dessen obere Walze ein Saugzylinder (6) ist, einem mit dem Saugzylinder (6) zusammenwirkenden Förderzylinder (7), der aufeinanderfolgend die Zettel (8) an den Saugzylinder (6) übergibt, und aus einer auf den Walzenspalt gerichteten Breitschlitzdüse (30), die in gesteuerter Weise erwärmte Luft in den Walzenspalt bläst, besteht
**dadurch gekennzeichnet,**
**daß** die Temperatur unmittelbar nach der Verklebung des verklebten Bereichs des Werkstücks, bei der eine gute Verklebung erfolgt, als Sollwert bestimmt wird und
**daß** die Temperatur der erwärmten Luft auf diesen Sollwert eingeregelt wird.

2. Verfahren nach Anspruch 1, **dadurch gekennzeichnet, daß** die Temperatur des verklebten Bereichs des Werkstücks als Istwert unmittelbar nach der Verklebung gemessen und die Temperatur der erwärmten Luft so lange erhöht oder erniedrigt wird, bis der Istwert der Messung dem Sollwert entspricht.

3. Verfahren nach Anspruch 1 oder 2, **dadurch gekennzeichnet, daß** die Temperatur der Vorrichtung gemessen wird und eine dieser gemessenen Temperatur entsprechende Voreinstellung der Temperatur der erwärmten Luft erfolgt.

## Claims

1. Process for controlling the temperature of heated air in an apparatus for adhesively bonding plastic sheets, preferably for applying panels (8) of plastic sheet to flat-lying. workpieces (2) of plastic sheet, for example applying valve panels to the opened-up bottom squares or bottom cover panels to the closed bottoms of cross-bottom valve bags, the apparatus comprising a frame with a plate or a table (1), over which the pieces of tube or workpieces (2) are continuously conveyed by a conveying device, a pair of conveying rollers (4, 5), which are arranged in a gap (3) in the table plate (1) and are mounted in the frame, the roller gap of which pair of rollers is essentially in line with the table surface and the lower roller (4) of which is a backing roller and the upper roller of which is a suction cylinder (6), a conveying cylinder (7), which interacts with the suction cylinder (6) and successively transfers the panels (8) to the suction cylinder (6), and a slot nozzle (30), which is directed at the roller gap and blows heated air into the roller gap in a controlled way, **characterized in that** the temperature directly after the adhesive bonding of the adhesively bonded region of the workpiece when a good bond takes place is determined as a setpoint value and **in that** the temperature of the heated air is adjusted to this setpoint value.

2. Process according to Claim 1, **characterized in that** the temperature of the adhesively bonded region of the workpiece is measured directly after the adhesive bonding as an actual value and the temperature of the heated air is increased or decreased until the actual value of the measurement corresponds to the setpoint value.

3. Process according to Claim 1 or 2, **characterized in that** the temperature of the apparatus is measured and a pre-setting of the temperature of the heated air corresponding to this measured temperature is performed.

## Revendications

1. Procédé pour régler la température d'air chauffé dans un dispositif pour le collage de films plastique, de préférence pour l'application d'étiquettes (8) en film plastique sur des pièces (2) posées à plat en film plastique, par exemple des étiquettes de vanne sur les carrés de fond étirés ou des feuilles de recouvrement de fond sur les fonds posés de sacs à valve à fond croisé ; le dispositif comprenant un bâti avec une plaque ou une table (1), au-dessus de laquelle les bouts de flexible ou les pièces (2) sont transportés de façon continue par un dispositif de transport, une paire de cylindres de transport (4, 5) disposée dans une fente (3) du plateau de table (1) et logée dans le bâti, dont la fente des cylindres est alignée sensiblement avec la surface de la table et dont le cylindre (4) inférieur est un cylindre de contre-pression et dont le cylindre supérieur est un cylindre aspirant (6), un cylindre transporteur (7) coopérant avec le cylindre aspirant (6), qui remet de façon successive les étiquettes (8) au cylindre aspirant (6), et une filière plate (30) orientée vers la fente des cylindres, qui insuffle de l'air chauffé dans la fente des cylindres de façon contrôlée,
**caractérisé en ce que** la température est déterminée comme valeur de consigne juste après le collage de la zone collée de la pièce, à laquelle on a un bon collage et
**en ce que** la température de l'air chauffé est réglée sur cette valeur de consigne.

2. Procédé selon la revendication 1, **caractérisé en ce que** la température de la zone collée de la pièce est mesurée comme valeur réelle juste après le collage et la température de l'air chauffé est augmentée ou abaissée jusqu'à ce que la valeur réelle de la mesure corresponde à la valeur de consigne.

3. Procédé selon la revendication 1 ou 2, **caractérisé en ce que** la température du dispositif est mesurée et qu'un pré-réglage, correspondant à cette température mesurée, de la température de l'air chauffé est effectué.
